# EUROPÄISCHE PATENTSCHRIFT

(11) **EP 3 077 305 B1**
(45) Veröffentlichungstag und Bekanntmachung des Hinweises auf die Patenterteilung: **21.09.2022**
(21) Anmeldenummer: 14809322.2
(22) Anmeldetag: 01.12.2014
(51) Int. Cl.: B65G 47/84, B65G 47/86

(54) **TRANSPORTSTERN MIT VERSTELLBAREN STERNTASCHEN**
TRANSPORT STAR WHEEL HAVING ADJUSTABLE STARWHEEL POCKETS
ÉTOILE DE TRANSPORT COMPORTANT DES RÉCEPTACLES D'ÉTOILE RÉGLABLES

(30) Priorität: 02.12.2013 DE 102013113292
(43) Veröffentlichungstag der Anmeldung: 12.10.2016
(73) Patentinhaber: KHS GmbH, 44143 Dortmund (DE)
(72) Erfinder: FAHLDIECK, Andreas, 55743 Idar-Oberstein (DE); KRIEG, Andreas, 67596 Dittelsheim-Hessloch (DE); MALLITZKI, Nils, 55469 Simmern (DE)
(86) Internationale Anmeldenummer: PCT/EP2014/076060
(87) Internationale Veröffentlichungsnummer: WO 2015/082381

(56) Entgegenhaltungen:
- DE-A1- 10 050 084
- JP-A- H10 338 342
- JP-A- S61 211 220
- US-A1- 2011 114 454
- US-A1- 2011 272 246

## Beschreibung

Die Erfindung betrifft eine Vorrichtung zum Transportieren von Behältern, welche einen Drehtisch aufweist, der übereinander angeordnete Formatteile hat, welche an ihrem jeweiligen Außenumfang eine Vielzahl von Sterntaschen zur Aufnahme von jeweils einem Behälter aufweist, wobei zumindest eines der Formatteile in Umfangsrichtung relativ zu zumindest einem anderen verdrehbar ist, so dass ein Öffnungsbetrag der Sterntaschen verstellbar ist.

Solche Vorrichtungen werden z.B. in Behälterbehandlungsanlagen eingesetzt. Derartige Behälterbehandlungsanlagen sind in unterschiedlichen Ausführungen, z.B. als Füllmaschinen, Etikettiermaschinen, Inspektionsmaschinen oder Rinser bekannt. Die Behälter werden der Behandlungsmaschine auf einem Förderband stehend und möglicherweise auch ausgerichtet zugeführt, wobei der Behälterein- und -auslauf über je ein Sternrad erfolgt. Das Einlaufsternrad befördert die Behälter auf den Drehtisch. Entlang des rotativen Transportweges des Drehtisches werden die Behälter behandelt, also z.B. etikettiert, inspiziert und/oder dergleichen wobei das Auslaufsternrad die behandelten Behälter entnimmt. Dabei ist es üblich, für jeden Behälterdurchmesser einen eigenen Sternradsatz vorzusehen.

Eingangs genannte Behälter können beispielsweise als Flaschen für Flüssigkeiten, beispielsweise für Getränke verwendet werden. Auch Fässer oder Dosen können solche Behälter sein. Die Behälter z.B. Flaschen können aus einem transparenten oder transluzenten Material, beispielsweise aus Glas oder aus einem transluzenten Kunststoff, z.B. PET bestehen. Denkbar ist aber auch, dass die Behälter aus anderen Materialien bestehen und mit anderen Füllgütern befüllbar sind. Als Behälter gelten im Sinne der Erfindung auch Preforms, also Gegenstände, welche noch zu den Behältern geformt werden.

Ersichtlich ist, dass bei einem Behälterwechsel der betreffende, angepasste Sternradsatz montiert werden muss, wobei die Umbaumaßnahmen natürlich erhebliche Stillstandzeiten verursachen. Von daher sind Bestrebungen bekannt, einstellbare Sternräder vorzusehen, wobei deren Formatteile auf unterschiedliche Behälterdimensionen, insbesondere auf unterschiedliche Behälterdurchmesser einstellbar sind. So kann eine zeitraubende Umrüstung vermeidbar sein.

So offenbart die DE 103 52 885 A1 pauschal dass Vorrichtungen zwei fest miteinander verbundene, koaxiale Sternräder aufweisen, wobei zwischen den zwei Sternrädern ein mittleres, koaxiales Sternrad angeordnet ist. Es seien Mittel vorgesehen, um das mittlere Sternrad gegenüber dem Sternradpaar um einen Einstellwinkel derart zu verdrehen, dass die Vorrichtung an verschiedene Behälterdurchmesser anpassbar sei.

Weiter geht die DE 103 52 885 A1 nicht auf die gegeneinander verdrehbaren Sterntaschen ein. Stattdessen schlägt die DE 103 52 885 A1 vor, dass die schiebenden und/oder zentrierenden Flanken des Sternrades selbststätig antreibbar und in ihrer Rotationsposition auf die unterschiedlichen Behälterdurchmesser durch Drehverstellen in Bezug auf den Behältermittelpunkt zum jeweiligen Behältermanteldurchmesser und auf die entsprechenden Position in der Maschine einstellbar sind.

Aus der DE 694 05 650 T2 bzw. EP 0 629 569 B1 ist ein Sternrad mit einer Justiervorrichtung bekannt. Dabei werden die Öffnungen der Behälteraufnahmen verändert, indem Zahnstangen durch Einwirkung von Zahnrädern verdreht werden, so dass zwei übereinander angeordnete Sternräder um ihre gemeinsame Drehachse gegenseitig verdreht werden.

Die DE 690 11 749 T2 bzw. EP 0 401 698 B1 offenbart dagegen, dass an dem Drehtisch relativ zu diesem verschiebbare Haltevorrichtungen angeordnet sind, wobei jede Haltevorrichtung eine Saugvorrichtung aufweist. Die Saugvorrichtung ist an einem Gleitelement getragen, welches in Bezug auf den Drehtisch in radialer Richtung verschiebbar ist.

In der DE 31 43 511 A1 ist ein Ein-und Auslaufstern offenbart, welcher an seinem Trägerrad Einstellvorrichtungen aufweist, die Aussparungen mit unterschiedlichen Radien aufweisen.

Die DE 34 16 654 A1 beschreibt, dass die Aufnahmetaschen an den größtmöglichen Behälterdurchmesser angepasst sind, in welche elastische Rückstellmittel einen kleineren Behälterdurchmesser anpassbar aufgenommen sind.

Auch die Zusammenfassung der JP07-237745 A offenbart eine verstellbare Aufnahmeöffnung. Die EP 0 412 059 B1 bezieht sich auf Übertragungssternräder, die mit einer Mehrzahl von Stößeln versehen sind, welch sich an verschiedene Behälter anpassen, und auch mit einer äußeren, regulierbaren Führung versehen sind.

Die EP 2 447 194 B1 befasst sich ebenfalls mit einstellbaren Sterntaschen. Dazu ist ein Verstellmechanismus vorgesehen, welches ein erstes und ein zweites Verstellelement aufweist. Das erste Verstellelement ist mit einem ersten Transportrad gekoppelt. Das zweite Verstellelement ist mit einem Verstellkörper gekoppelt. Die Bewegungen beider Verstellelemente sind miteinander gekoppelt, wobei das erste und das zweite Verstellelement jeweils um eine vorgegebene Schwenkachse gekoppelt sind.

Ebenso offenbart die DE 26 23 309 Verstellmittel zum Einstellen eines zwischen zwei Sternrädern angeordneten mittleren Sternrades. Das Verstellmittel ist eine in zwei Gewindeführungen gelagerte Gewindespindel.

Die EP 1 529 745 B1 und die EP 0 355 971 befassen sich ebenfalls mit einstellbaren Sterntaschen.

Die JPH 10-338342 offenbart eine Vorrichtung nach dem Oberbegriff des Anspruchs 1.

Die Einstellbarkeit von Drehtischen an unterschiedliche Behälterdurchmesser bietet insofern noch Raum für Verbesserungen. Von daher liegt der Erfindung die Aufgabe zugrunde, eine Vorrichtung der eingangs genannten Art anzugeben, welche eine einfache Anpassung an unterschiedliche Behälterdurchmesser erlaubt.

Erfindungsgemäß gelingt die Lösung der Aufgabe mit einer Behälterbehandlungsanlage mit den Merkmalen des Anspruchs 1.

Es ist darauf hinzuweisen, dass die in der nachfolgenden Beschreibung einzeln aufgeführten Merkmale sowie Maßnahmen in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Vorgeschlagen wird eine Vorrichtung zum Transportieren von Behältern in Form eines Transportsterns, insbesondere von Flaschen und Dosen, welche einen Drehtisch oder Standfläche aufweist, mit übereinander angeordneten Formatteilen. Diese sternförmigen Formatteile bilden gemeinsam am Außenumfang eine Vielzahl von Stern- oder Transporttaschen, die der Aufnahme von jeweils einem Behälter dienen. Dabei ist zur Anpassung an unterschiedliche Behälterdurchmesser zumindest eines der sternförmigen Formatteile relativ zu einem oder mehreren anderen feststehenden Formatteilen verdrehbar (in Umfangsrichtung), so dass der Taschendurchmesser oder der Öffnungsbetrag der gemeinsam gebildeten Sterntaschen veränderlich ist.

Zielführend ist, wenn jeweils zwei übereinander angeordnete Formatteile jeweils zumindest ein Steuerelement aufweisen, wobei die Steuerelemente direkt übereinander angeordneter Formatteile eine unterschiedliche Ausrichtung aufweisen, wobei ein Einstellelement vorgesehen ist, welches sowohl in das Steuerelement des einen Formatteils und in das darunter oder darüber liegende Steuerelement des anderen Formatteils eingreift wobei das Einstellelement mit mindestens einem Betätigungselement verbindbar ist, mittels welchem das Betätigungselement in radiale Richtung direkt oder mittelbar antreibbar ist. Der besondere Vorteil der besteht darin, dass neben dem einen oder mehreren Betätigungselementen, keine weiteren radialen Führungselemente erforderlich sind, wie bspw. Führungsbolzen, Führungsstangen, etc., vielmehr dient das Betätigungselement selbst als Antriebselement und einziges, radiales Führungselement. Die unterschiedliche Ausrichtung kann darin bestehen, dass relativ zur radialen Richtung das Steuerelement eines Formatteils einen anderen Kurvenverlauf (Radius) oder einen anderen Ablenkungswinkel zum Radius aufweist als ein oder mehrere Steuerelemente der andern Formatteile.

Insbesondere sind Ausrichtungen von zwei einzelnen Steuerelementen oder Gruppen von Steuerelementen spiegelbildlich zueinander, wobei der Radius die Spiegelachse bildet. Die Steuerelemente unterschiedlicher Formatteile sind dabei idealerweise in der Art von Langlöchern oder Führungskurven in übereinander liegenden, parallelen Ebenen zueinander angeordnet.

In einer einfachen Variante, insb. wenn nur geringe Verstellwerte/-winkel für die Sterntaschen erforderlich sind, kann nur ein Steuerelement oder Gruppe von Steuerelementen relativ zum Radius verschieden ausgerichtet sein, das andere Steuerelement oder die Gruppe der anderen Steuerelement der benachbarten Formatteile sind dabei radial ausgerichtet.

Die Formatteile können auch als Sternräder bezeichnet werden. Denkbar ist, dass vier Sternräder vorgesehen sind, von denen jeweils zwei obere und zwei untere relativ zueinander einstellbar sind, worauf aber noch eingegangen wird.

Grundsätzlich ist es möglich, dass lediglich zwei Sternräder vorhanden sind, wobei eines davon fest gelagert ist, wobei das andere einstellbar gelagert ist, so dass die Einstellung erfolgen kann. Möglich ist auch beide Sternräder einstellbar zu lagern, wobei ein Arretieren im Betriebszustand sinnvoll ist. Möglich ist auch drei Sternräder vorzusehen, von denen ein mittleres, oder die beiden äußeren, oder alle drei drehbar einstellbar sind. Weiter ist denkbar, wenn vier Sternräder vorgesehen, wobei jeweils zwei übereinander angeordnete Sternräder eine obere Ebene bilden, wobei die anderen beiden eine untere Ebene bilden. So können die Sternräder mit ihren Sterntaschen an unterschiedliche Behälterdurchmesser beispielsweise im Bauchbereich angepasst werden. Möglich ist dabei alle vier Sternräder verstellbar zu lagern, wobei aber auch ausreichend sein kann jeweils eines der Sternräder der oberen und unteren Ebene fest zu lagern, wobei das andere relativ dazu verstellbar ist.

Gemäß einer nicht erfindungsgemäßen Ausgestaltung ist es alternativ zur Ausbildung von Sterntaschen mittels Sternrädern zudem bspw. auch möglich, Sterntaschen durch zueinander korrespondierend angeordnete Klemmarme auszubilden. So können von zwei Klemmarmen, die eine Sterntasche ausbilden, ein erster Klemmarm an einem ersten Formatteil und ein zweiter Klemmarm an einem zweiten Formatteil angeordnet sein. Die Formatteile sind übereinander angeordnet und gegeneinander verdrehbar, so dass auch bei der Ausbildung von Klemmarmen anstelle von Sternrädern der Abstand der Klemmarme zueinander (Sterntaschengröße) mittels der Drehbewegung der Formatteile einstellbar ist.

Wie bereits beschrieben, kann der Transportstern mehrere Ebenen aufweisen. Alternativ zu einer nicht erfindungsgemäß aus Sternrädern oder Klemmarmen ausgebildeten oberen Ebene weist die obere Ebene erfindungsgemäß nebeneinander angeordnete Behälterklammern zum Greifen und Halten der Behälter auf.

Unter einer Behälterklammer wird eine Vorrichtung verstanden, die zum Umklammern des Behälters ausgebildet ist. Die Behälterklammer weist insbesondere zwei Klammerarme auf, die korrespondierend zueinander ausgebildet sind und zwischen denen ein Abschnitt des Behälters eingeklemmt werden kann. Die Klammerarme sind insbesondere über eine Verstellvorrichtung zu bewegen. Dabei kann die Behälterklammer als passive Klammer, die über eine Federspannung in einer Klemmposition gehalten wird und bei der der Behälter zum Öffnen der Klammer zwischen die Klammerarme gedrückt werden muss, ausgebildet sein. Auch kann die Behälterklammer eine aktive Klammer sein, bei der bspw. mittels einer Steuerkurve die Verstellvorrichtung aktiviert wird, so dass die Klammerarme über die Verstellvorrichtung geschlossen, geöffnet und/oder sowohl geschlossen als auch geöffnet wird.

Insbesondere ist zu jeder Sterntasche in der unteren Ebene des Transportsterns jeweils eine Behälterklammer in der oberen Ebene des Transportsterns angeordnet. Ein vom Transportstern erfasster Behälter wird somit im Bereich der unteren Ebene in einer Sterntasche (insbesondere quer zur Radialrichtung) gehalten, die entweder durch zwei Sternräder oder durch zwei Klammarme gebildet wird. Damit der Behälter im Betrieb des Transportsterns nicht aufgrund der auftretenden Fliehkräfte radial aus dem Transportstern ausweicht, ist üblicherweise ein Gegenanschlag angeordnet. Aufgrund der Ausführung des Transportsterns mit einer oberen Ebene aus Behälterklammern kann der Transportstern jedoch ohne Gegenanschlag genutzt werden, da die Behälterklammern eine radiale Bewegung des im Transportstern gehaltenen Behälters verhindern.

Hierfür sind die Behälterklammern derart ausgerichtet, dass sie den Behälter zumindest abschnittsweise umgreifen und so zumindest eine Bewegung radial nach außen verhindern. Insbesondere weist die Behälterklammer dabei zusätzlich auch eine weitere Anlagefläche auf, an dem sich der Behälter abstützt und wodurch eine Bewegung radial nach innen, d.h. zur Transportsternmitte, blockiert wird.

Der Transportstern ist insbesondere geeignet, um Flaschen bspw. Glas- oder PET-Flaschen zu transportieren. Flaschen weisen zumeist eine in Richtung des Mündungsbereiches sich verjüngende Form auf. Um auch Flaschen unterschiedlicher Größen und Durchmesser mit dem Transportstern und insbesondere mittels der Behälterklammer zu erfassen, weist die Behälterklammer erfindungsgemäß zwei Klammerarme mit jeweils einer um eine in Längsachsenrichtung der Klammerarme ausgerichteten Drehachse drehbaren Klemmbacken auf.

Die Längsachsenrichtung der Klammerarme erstreckt sich ausgehend von einem äußeren Ende des Klammerarms in Richtung der Transportsternmitte. Abhängig von der Ausrichtung der Klammerarme kann die Längsachsenrichtung der Klammerarme somit bspw. der Radialrichtung des Transportsterns entsprechen. Die Klemmbacke ist somit um ein Kopfende des Klammerarms schwenkbar, d.h., sie kann gegenüber einer vertikalen Längsachse des Transportsterns schräg gestellt werden. Hierdurch wird ein besonders sicherer Halt der Klemmbacke an dem Behälter insbesondere an einem konisch geformten Behälterbereich, wie einem Flaschenhals, ermöglicht.

Um die Stabilität der Klemmbacke an möglichst vielen in ihren Abmessungen verschiedenen Getränkebehältern insbesondere Getränkeflaschen weiter zu verbessern, ist zudem nach einer Weiterbildung der Erfindung vorgesehen, dass jede Klemmbacke mindestens einen Greifschenkel zum Umgreifen des Behälters und einen Stützschenkel zum Abstützen des Behälters aufweist.

Die Klemmbacke kann somit U-profilartig, d.h. halbschalenförmig ausgebildet sein und zwei Schenkel aufweisen. Die Schenkel sind vorzugsweise unterschiedlich lang, wobei insbesondere der Stützschenkel gegenüber dem Greifschenkel verkürzt ist.

Die Schenkel erstrecken sich nach außen, wobei der Greifschenkel derart ausgebildet und angeordnet ist, dass er mit einem Abschnitt bspw. einem Greifabschnitt um die Flasche herum greift und so eine Bewegung des Behälters radial nach außen blockiert. Der Stützschenkel ist dagegen zum Abstützen des Behälters ausgebildet, wodurch eine Bewegung des Behälters in Richtung radial nach innen, d.h. zur Transportsternmitte, verhindert werden soll. Hierfür ist wie bereits ausgeführt der Stützschenkel insbesondere kürzer als der Greifschenkel ausgebildet. Vorteilhafterweise weisen beide Schenkel zudem mindestens jeweils eine Anlagefläche auf, die zum Kontakt mit dem Behälter vorgesehen ist. Dementsprechend können die Anlageflächen der Stützflächen insbesondere zu einer Mittelachse der Behälterklammer nach außen zeigend angeordnet sind, wodurch die Anlage des Behälters an den Anlageflächen deutlich verbessert wird.

Die Greifschenkel weisen zudem zumeist eine bogenförmige Anlagefläche auf, die sich zumindest mit einem nach außen liegenden Endabschnitt an den Getränkebehälter anlegt.

Die U-profilartige Klemmbacke ist insbesondere derart am Klemmarm angeordnet, dass der gegenüber dem Stützschenkel länger ausgebildete Greifschenkel in Richtung der vertikalen Längsachse des Transportsterns unterhalb des Stützschenkels positioniert ist. Nach der Entnahme eines Behälters aus der Behälterklammer kann hierdurch besonders einfach eine automatische Rückschwenkbewegung um die Drehachse der Klemmbacke in eine senkrechte Ausgangsposition bewirkt werden.

Insbesondere die Ausführung des Transportsterns mit einer unteren Ebene, die Sterntaschen aufweist und aus Sternrädern oder Klemmarmen gebildet ist, und einer oberen Ebene aus Behälterklammern, bietet bei einer Vielzahl von unterschiedlichen Behältern eine gute Einsatzmöglichkeit bei gleichbleibender guter Funktionalität und einfacher Bedienbarkeit. Zudem ist ein Transportstern in dieser Ausführung besonders robust und unempfindlich gegenüber Glasscherben oder anderweitigen Verschmutzungen. Auch erfolgt mit dem um die Drehachsen schwenkbaren Klemmbacken eine besonders gute Ausnutzung der Flaschenteilung, da der Klammerarm im Halsbereich der Getränkeflasche ausreichend Platz zum Öffnen erhält. So ermöglicht die besondere Lage der Behälterklammer in Kombination mit der in der unteren Ebene ausgeführten Sterntasche in der Maschine eine besonders einfache konstruktive Anordnung von bspw. notwendigen Scherbenschutzvorrichtungen. Ein weiterer Vorteil ist, dass bspw. bei der Verwendung einer aktiven Behälterklammer, im oberen Bereich des Behälters keine Ausleitkurve zum Ausführen des Behälters erforderlich ist.

Anzumerken ist, dass die obere Ebene mit den Behälterklammern mit jeder Art von vorgenannten unteren Ebenen kombinierbar ist. Entscheidend sind ausschließlich die Stützung des Behälters in der unteren Ebene quer zur Radialrichtung und die feste Umklammerung des Behälters im Bereich der oberen Ebene mittels der Behälterklamme, um im Betrieb eine radiale Bewegung des Behälters zumindest nach außen sicher zu verhindern.

Nach einer Weiterbildung der Erfindung kann vorgesehen sein, das jeweilige Steuerelement als Kulissenführung auszuführen. Die Kulissenführung kann dabei zweckmäßiger Weise in einem Fortsatz eingebracht sein, welcher an einem Innenumfang des jeweiligen Formatteils angeordnet ist.

In bevorzugter Ausgestaltung weist der Fortsatz eine dreiecksförmige Ausgestaltung auf, deren Basis an dem Innenumfang des Formatteils angeordnet ist, wobei der Fortsatz bevorzugt eine verrundete Spitze aufweist, die sich von dem Innenumfang wegorientiert erstreckt. Der jeweilige Fortsatz kann in einer Position deckungsgleich zum jeweils anderen Fortsatz sein, welcher darüber oder darunter angeordnet ist.

Die jeweilige Kulissenführung ist nun als Langloch in den Fortsatz eingebracht wobei idealer Weise vorgesehen ist, dass einander zugeordnete Steuerelemente zwar in Radialrichtung zu einer Mittelachse des Drehtisches orientiert sind, jedoch unterschiedlich ausgerichtet sind. Dies bedeutet, dass ein Steuerelement z.B. einen gekrümmten Verlauf aufweisen kann, der unterschiedlich ist zu dem gekrümmten Verlauf des anderen, zugeordneten Steuerelementes. Insofern können sich die einander zugeordneten Steuerelemente vorteilhaft einander schneiden, wobei die einander zugeordneten Steuerelemente zumindest mit ihrer resultierenden Mittelachse des gekrümmten Langlochs winklig zueinander angeordnet sind. Natürlich könne die Langlöcher auch ohne Krümmung ausgeführt sein, und einfach winklig zueinander angeordnet sein. Bei einem gekrümmten Verlauf der einander zugeordneten Steuerelemente ist es so, dass diese bezogen auf eine Mittellinie des Drehtisches nach außen orientiert, also jeweils konvex sind. Möglich ist auch eines der Steuerelemente ohne Wölbung, also geradlinig in einem festen Abweichwinkel zum Radius auszuführen, wobei das andere, zugeordnete Steuerelement mit einem gekrümmten Verlauf ausgeführt sein kann.

Aufgrund des rotativen Behältertransportes um die Drehachse des Drehtisches herum, wirken am Umfang der Formatteile entsprechende Kräfte. Da die Steuerelemente winklig zueinander angeordnet sind, wird die resultierende Kraft in radialer Richtung reduziert. Dabei kann idealer Weise eine Selbsthemmung erreicht werden, wenn die Winkel entsprechend gewählt werden.

Die einander zugeordneten Steuerelemente sind wirkmäßig über das jeweilige Einstellelement miteinander verbunden. Sinnvoll ist im Sinne der Erfindung, wenn das Einstellelement einen Bolzen aufweist, an welchem Kulissensteine angeordnet sind. Einer der Kulissensteine greift in das eine Steuerelement ein, wobei der andere Kulissenstein in das andere Steuerelement eingreift.

Das Betätigungselement oder die Betätigungselemente können gemäß einer Weiterbildung in Form einer Spindel oder Spindelstange ausgebildet sein. In einer vorteilhaften Ausführungsform weisen die spindelförmigen Betätigungselemente mindestens an einem ihrer Enden ein Außengewinde auf, welches in Eingriff entsprechenden Muttergewinden des Einstellelements gebracht werden können.

Der in der Einbaulage radial innen liegende oder mittlere Abschnitt, kann in geeigneter Weise hierzu unterschiedlich geformt sein, abhängig von der Art der gewünschten Drehmomentübertragung auf die jeweilige Spindel oder Spindelstange, wie bspw. über ein Handrad, eine Motorkupplung, eine Werkzeugangriffskontur, etc. Wird ein anders gearteter Linearantrieb vorgesehen, bspw. eine Schubstange, die elektromagnetisch angetrieben wird, muss die Krafteinleitung entsprechend angepasst erfolgen, um den radialen Vortrieb des Einstellelementes zu veranlassen.

In einer möglichen Ausgestaltung weist das Einstellelement eine Spannvorrichtung auf, welche kopfseitig an dem Bolzen angeordnet ist. Die Spannvorrichtung kann z.B. eine Schraube oder beispielhaft ein Exzenterspanner sein. Ist die Spannvorrichtung in der gespannten Position, sind die Kulissensteine vertikal verpresst, so dass die Sternräder, also die betrefflichen Sternebenen durch Reibschluss relativ zueinander fixiert sind. Mit einem Führungselement ist die Mittellage, also die Mitte der eingestellten Sterntasche sichergestellt, wobei die Achsen der Kulissensteine radial geführt sind. Aufgrund der oben beschriebenen idealerweise erreichbaren Selbsthemmung wird die Klemmkraft der Spannvorrichtung ausreichend sein, da keine direkte Haltekraft mehr aufzubringen ist, was auch schon der Fall ist, wenn die Selbsthemmung noch nicht erreicht ist. So kann auch bei hohen Umfangskräften eine lagestabile Sterntaschengröße erreicht werden. Wird die Spannvorrichtung gelöst, können die Sternräder zueinander verdreht werden können. Dies kann manuell erfolgen, indem z.B. an den Sternrädern angegriffen wird, so dass diese durch die Kulissenführung zwangsgeführt verdreht werden.

In bevorzugter Ausgestaltung weist das Einstellelement ein Betätigungselement mit Außengewinde auf, welches mit einer Gewindebohrung des Einstellelementes zusammenwirkt. Genauer ist eine Gewindebohrung in dem Bolzen eingebracht, wobei der Bolzen die Kulissensteine aufweist, welche in die einander zugeordneten Steuerelemente eingreifen. Zielführend ist, wenn das Betätigungselement an einem starren Halteelement gelagert ist. Insofern ist quasi ein Spindeltrieb gebildet.

Durch Verdrehen des Betätigungselementes wird unmittelbar der Bolzen in Radialrichtung verschoben, so dass die Kulissensteine entlang der Zwangsführung, also entlang der Steuerelemente bewegt werden. So werden die einander zugeordneten Sternebenen, also Sternräder relativ zueinander verdreht, um die gewünschte Taschengröße einzustellen.
Durch die Lage des Bolzens zwischen den Sternebenen, übernehmen diese auch noch die Aufgabe der Verdrehsicherung im Sinne einer Drehmomentstütze.

Das Betätigungselement hat zusätzlich zum Verschieben des Bolzens noch die Funktion der Positionssicherung der eingestellten Sterntaschengröße, so dass auf ein gesondertes Führungselement zur Sicherstellung der Mittelage verzichtet werden kann.

An dem Betätigungsende des Betätigungselementes kann ein Handrad angeordnet sein, so dass das Betätigungselement manuell verdrehbar ist. Möglich ist auch, an dem Betätigungsende eine Kurbel vorzusehen, und/oder einen Antrieb angreifen zu lassen, welcher die gewünschte Einstellung automatisch vornimmt. Weiter ist denkbar, wenn grundsätzlich eine automatisierte Einstellung vorgesehen wird, wobei die Einstellung über Steuereinheiten rechnergestützt erfolgen kann. Ersichtlich ist, dass das Betätigungselement nicht vollständig entlang seiner axialen Erstreckung mit einem Außengewinde versehen sein muss. Es reicht aus, wenn das Außengewinde am freien Endbereich angeordnet ist, der zum Verstellen vorgesehen werden kann.

In einer möglichen Variante kann vorgesehen sein, an dem einzigen starren Halteelement zwei Betätigungselemente anzuordnen, von denen jeweils eines auf jeweils ein zugeordnetes Einstellelement einwirkt. Die beiden Betätigungselemente sind in idealer Ausgestaltung einander entgegengesetzt orientiert, und wirken sinnvoller Weise auf jeweils unterschiedliche Sternebenen. Dabei kann eines der Betätigungselemente ein Linksgewinde und das andere ein Rechtsgewinde aufweisen, wobei die Innengewinde der Bolzen entsprechend ausgeführt sind.

Die Erfindung wird im Folgenden anhand der Figuren an einem Ausführungsbeispiel näher erläutert. Es zeigen:
- Fig. 1: einen Ausschnitt eines Sterntransporteurs mit einer Einstellmöglichkeit in einer ersten Ausgestaltung,
- Fig. 2a: einen Ausschnitt eines Sterntransporteurs mit einer Einstellmöglichkeit in einer zweiten Ausgestaltung,
- Fig. 2b: einen Ausschnitt eines Sterntransporteurs mit einer Einstellmöglichkeit analog Figur 2a oder 3 mit einem einzigen zentralen Verstellantrieb,
- Fig. 3: eine perspektivische Ansicht auf einen Sterntransporteur, und
- Fig. 4: eine Seitenansicht und eine Aufsicht auf den Sterntransporteur aus Figur 3,
- Fig. 5: schematisch in einer perspektivischen Darstellung einen Ausschnitt einer weiteren Ausführungsform eines Sterntransporteurs,
- Fig. 6: schematisch in einer perspektivischen Darstellung einen Schnitt durch den Sterntransporter aus Fig. 5 bei einer Behälterübergabe,
- Fig. 7: schematisch in einer perspektivischen Darstellung eine alternative Ausführungsform der in Fig. 5 und Fig. 6 dargestellten Klemmbacken.

In den unterschiedlichen Figuren sind gleiche Teile stets mit denselben Bezugszeichen versehen, weswegen diese in der Regel auch nur einmal beschrieben werden.

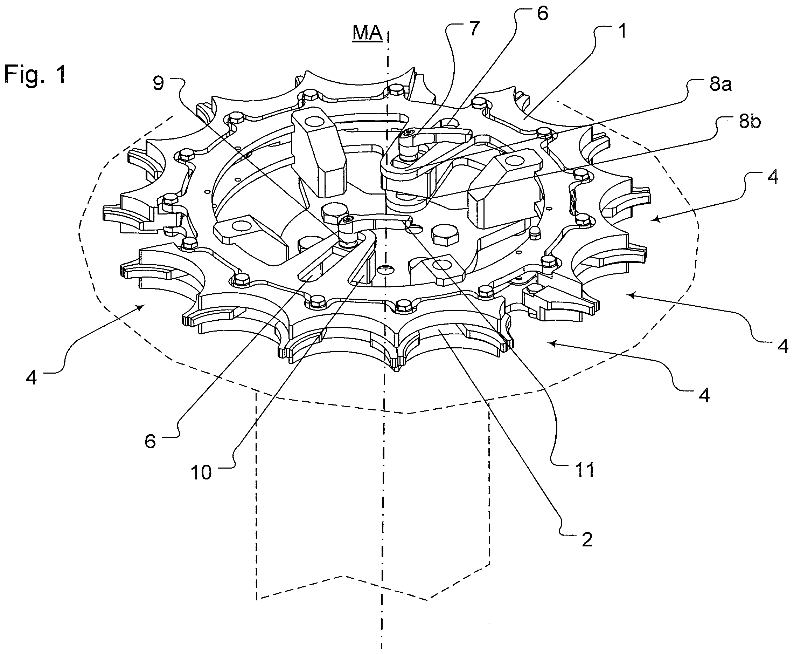

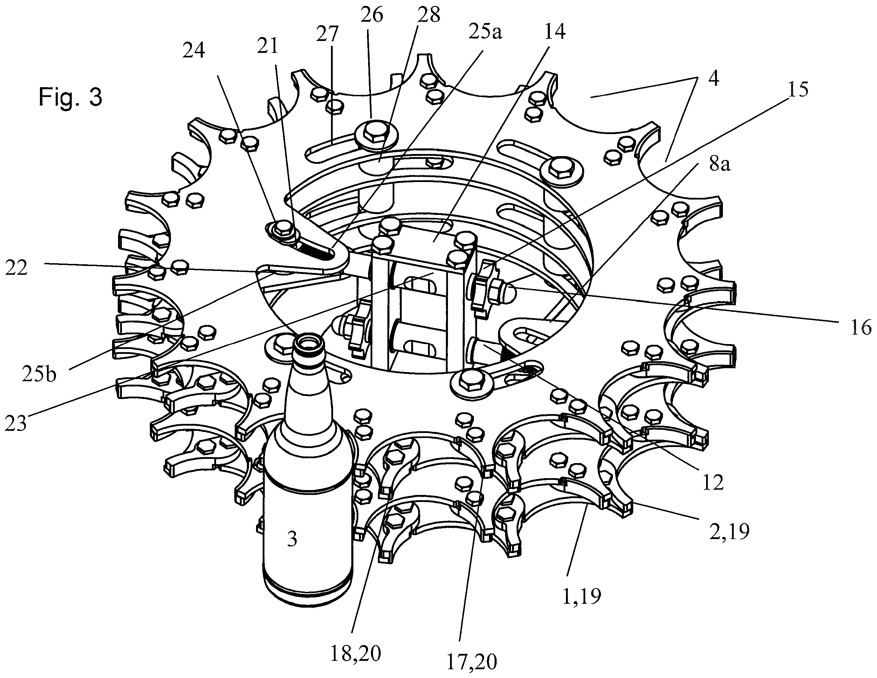

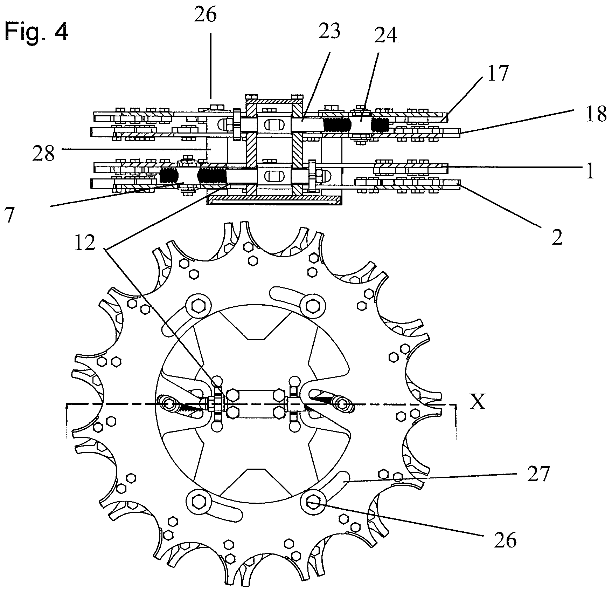

Figur 1 zeigt Formatteile 1 und 2. Die Formatteile 1 und 2 sind Bestandteil einer Vorrichtung zum Transportieren von Behältern 3 (Fig. 3), welche einen Drehtisch aufweist, der die übereinander angeordnete Formatteile 1 und 2a hat, welche an ihrem jeweiligen Außenumfang eine Vielzahl von taschenartigen Ausnehmungen aufweisen, welche gemeinsam Sterntaschen 4 zur Aufnahme von jeweils einem Behälter 3 aufweist, wobei zumindest eines der Formatteile 1 oder 2 in Umfangsrichtung relativ zu dem anderen Formatteil 1 oder 2 verdrehbar ist, so dass ein Öffnungsbetrag der Sterntaschen 4 verstellbar ist. Beispielhaft sind fünfzehn Sterntaschen 4 vorgesehen (Figuren 3 und 4). Die zentrale Säule des Transportsterns sowie die Tragfläche für die Behälter 3, sind als gestrichelte Linie angedeutet und sind auch analog bei allen anderen Ausführungsformen vorgesehen. Dabei kann die Tragfläche als eine Platte oder als eine Vielzahl von Teilplatten oder tellerartige Träger ausgeführt sein. Die zentrale Maschinenachse MA, um welche die Sterntaschen 4 umlaufen, ist als strichpunktierte Linie dargestellt und ist ebenfalls analog für sonstige Beispiele und Figuren zu sehen. Die üblichen, benachbarten Behandlungs- oder Transportvorrichtungen sind hier und nachfolgend nicht dargestellt.

Die Formatteile 1 und 2 können auch als Sternräder 1 und 2 bezeichnet werden, welche jeweils ein Steuerelement 5,6 aufweisen. Das jeweilige Steuerelement 5,6 direkt übereinander angeordneter Formatteile 1,2 weist eine unterschiedliche Ausrichtung zu dem jeweils zugeordneten auf, wobei ein Einstellelement 7 vorgesehen ist, welches sowohl in das Steuerelement 5 des einen Formatteils 1 und in das Steuerelement 6 des anderen Formatteils 2 eingreift.

Das jeweilige Steuerelement 5,6 ist als Kulissenführung, also beispielsweise relativ zum Radius als winklig oder schräg verlaufendes Langloch ausgeführt, welches jeweils in einem Fortsatz 8 eingebracht ist. Der Fortsatz 8a ist an dem Formatteil 1 angeordnet, wobei der Fortsatz 8b an dem Formatteil 2 angeordnet ist. Der jeweilige Fortsatz 8a, 8b ist mit seiner Basis an dem Innenumfang des jeweiligen Formatteils 1 oder 2 angeordnet und erstreckt sich mit seiner bevorzugt verrundeten Spitze von dem Innenumfang wegorientiert in das Innere des betrefflichen Formatteils 1 und 2. Die beiden zugeordneten Steuerelemente 5,6 schneiden sich, wobei beide Steuerelemente 5,6 bezogen auf eine Mittelachse X (Fig.4) nach außen gerichtet sind. Alternativ könnten diese gekrümmt verlaufenden, also kurvenartig gewölbt sein.

Das Einstellelement 7 weist einen Bolzen 9 aufweist, an welchem Kulissensteine 10 angeordnet sind. Einer der Kulissensteine 10 greift in das eine Steuerelement 5 ein, wobei der andere Kulissenstein 10 in das andere Steuerelement 6 eingreift.

Das Einstellelement 7 weist eine Spannvorrichtung 11 auf, welche kopfseitig an dem Bolzen 9 angeordnet ist. Die Spannvorrichtung 11 kann wie beispielhaft erkennbar ein Exzenterspanner sein.

Bei der in Figur 1 dargestellten Position ist die Spannvorrichtung 11 gespannt. Dabei sind die Kulissensteine 10 vertikal verpresst, so dass die Sternräder 1,2 durch Reibschluss relativ zueinander fixiert sind. Mit einem nicht dargestellten, zusätzlichen Führungselement ist die Mittellage, also die Mitte der eingestellten Sterntasche 4 sichergestellt, wobei die Achsen der Kulissensteine 10 radial geführt sind. Ist die Spannvorrichtung 11 gelöst, sind die Sternräder 1, 2 zueinander verdrehbar, so dass Sterntaschen 4 in der gewünschten Aufnahmegröße einstellbar sind.

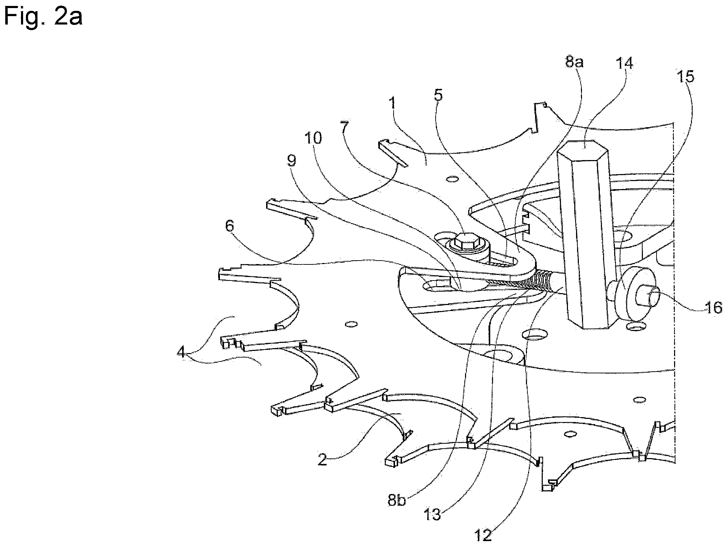

Bei dem in Figur 2a dargestellten Ausführungsbeispiel wird ein Spindeltrieb zum Einstellen der Sterntaschen 4 vorgestellt. Dabei weist der Bolzen 9, welcher die Kulissensteine 10 trägt, ein Innengewinde auf, in welches ein Betätigungselement 12 mit Außengewinde 13 eingreift. Das Betätigungselement 12 ist an einen starren Haltelement 14 gelagert, und weist kopfseitig, also gegenüberliegend zum Außengewinde 13 ein Betätigungsende 15 auf, an welchem beispielhaft ein Handrad 16 angeordnet ist. Das starre Haltelement 14 ist wie beispielhaft erkennbar eine einfache Säule, welche lediglich beispielhaft als Sechskant ausgeführt ist. Das Betätigungselement 12 ist in einer Durchgangsbohrung des starren Haltelementes 14 drehbar aufgenommen. Nicht erkennbar ist, dass das Betätigungselement 12 das Außengewinde 13 entlang seiner axialen Erstreckung bis zum Betätigungsende 15, also bis zum Handrad 16 aufweisen kann, so dass eine ungewollte Bewegung in Radialrichtung vermeidbar ist, wenn auch im starren Halteelement 14 ein korrespondierendes Innengewinde angeordnet ist.

Durch Verdrehen des Betätigungselementes 12, also durch Verdrehen des Handrades 16 wird unmittelbar der Bolzen 9 in Radialrichtung verschoben, so dass die Kulissensteine 10 entlang der Zwangsführung, also entlang der Steuerelemente 5,6 bewegt werden. So werden die einander zugeordneten Sternräder 1,2 relativ zueinander verdreht um die gewünschte Taschengröße 4 einzustellen.

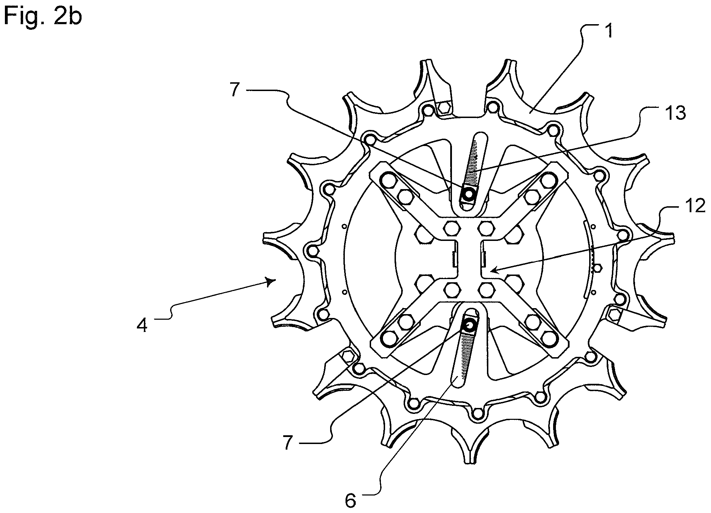

Die Figur 2b zeigt in einer Draufsicht Varianten der Figuren 2a oder 3. Hierbei ist nur eine einzige Spindel als Betätigungselement 12 mit zwei Außengewinde 13 an den beiden Enden vorgesehen. Erkennbar ist, dass kein weiteres Führungselement erforderlich ist. Das spindelförmige Betätigungselement 12 dient als Antriebselement und einziges Führungselement für die radiale Bewegung der Einstellelemente 7.

Bei dem in den Figuren 3 und 4 dargestellten Ausführungsbeispiel sind vier Formatteile 1,2 und 17,18 erkennbar, wobei die Formatteile 1,2 eine untere Ebene 19 und die Formatteile 17,18 eine obere Ebene 20 bilden.

Die Formatteile 1,2 und 17,18 weisen jeweils Steuerelemente 5,6 und 21,22 auf, welche einander diametral gegenüberliegend und natürlich in der Höhe versetzt sind, was auf den Höhenabstand der unteren Ebene 19 zur oberen Ebene 20 zurückzuführen ist. Die Steuerelemente 21,22 sind in Fortsätzen 25a und 25b angeordnet. Erkennbar ist, dass zwei Betätigungselemente 12 und 23 vorgesehen sind, welche bezogen auf das jeweils andere entgegengesetzt orientiert sind. So wirkt das eine Betätigungselement 12 auf das Einstellelement 7, wobei das Betätigungselement 23 auf ein Einstellelement 24 wirkt. Das starre Halteelement 14 ist in der Art eines Portals ausgeführt, wobei die Portalsäulen die Betätigungselemente 12 und 23 ebenfalls höhenversetzt lagern. Im Falle einer durchgehenden einzigen Spindel als Betätigungselement vergleichbar Figur 2b, weist ein Ende ein Rechtsgewinde auf, wobei das andere dann ein Linksgewinde hat. Natürlich sind die Innengewinde der Bolzen 9 in diesem Fall entsprechend ausgeführt.

Die Formatteile 1,2,17 und 18 sind über diese durchgreifende Sperrelemente 26 sperrbar, so dass die eingestellte Sterntasche 4 zusätzlich positionsgesichert ist. Die Sperrelemente 26 durchgreifen jeweils in den Formatteilen 1,2,17 und 18 eingebrachte gekrümmte Langlöcher 27, wobei Abstandhalter 28 zwischen den betrefflichen Formatteilen 1 und 2, 1 und 18 sowie 18 und 17 angeordnet sind, wie am besten den Figuren 3 und 4 entnehmbar ist. So können die Sperrelemente 26 die Formatteile 1,2,17 und 18 zum Einstellen der gewünschten Taschengröße freigeben, und durch Anziehen wieder festlegen. Sind nur zwei Formatteile 1 und 17 einstellbar, während die Formatteile 2 und 18 fest sind, gilt dasselbe mit der entsprechenden Einschränkung. Das Sperrelement 26 mit den entsprechenden Abstandhaltern 28 sowie mit dem Langloch 27 kann natürlich auch zu den Ausgestaltungen nach den Figuren 1 und 2 vorgesehen sein. Wie oben bereits analog beschrieben, dienen die beiden Spindeln als Betätigungselemente 12 und 23 mit je einen Außengewinde 13 an den radial außen liegenden Enden, so dass keine weiteren Führungselemente erforderlich sind. Die spindelförmigen Betätigungselemente 12 und 23 dienen dabei als Antriebselemente und einzige radiale Führungselemente.

In Figur 3 wird gezeigt, dass ein einziges Betätigungselement 12 mit einem Außengewinde 13 in Form einer Spindel zur einen Seite für die untere Ebene bzw. das unter Formatteil 2 vorgesehen ist, und weiterhin die ein weiteres Betätigungselement 23 mit Außengewinde 13 in Form einer Spindel auf der anderen Seite wirkt. Wie weiter oben beschrieben, ist dies aber in keiner Weise einschränkend zu sehen, denn ebenso können ohne den Grundgedanken zu verlassen, beide Spindeln auf derselben Sternseite angeordnet sein oder es kann eine einzige durchgehende Spindel mit zwei Außengewinden 13 oder Gewindeenden pro Ebene bzw. Formatteil 1 oder 2 vorgesehen werden.

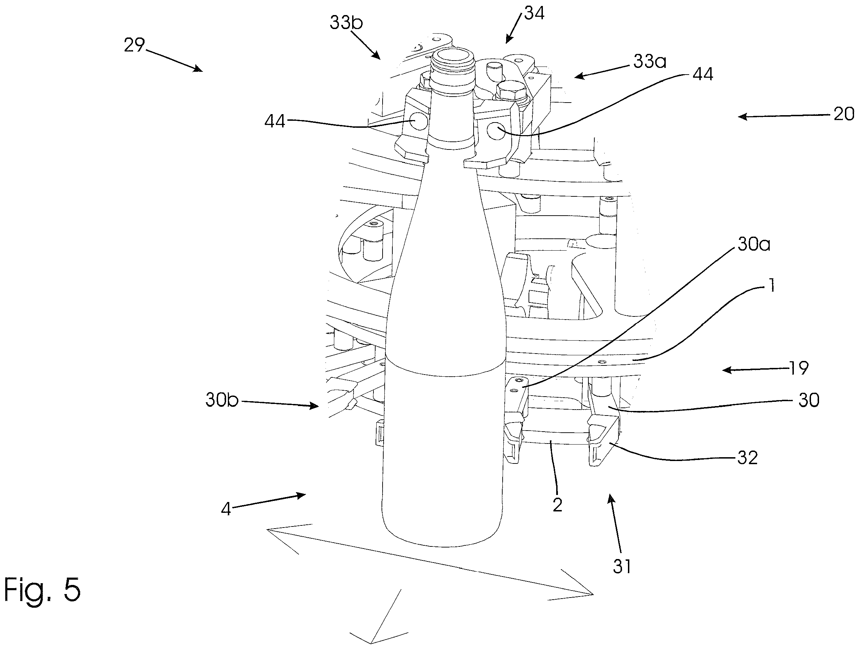

Figur 5 zeigt schematisch in perspektivischer Darstellung eine weitere Ausführungsform eines Transportsterns 29.

Der Transportstern 29 weist zwei Formatteilebenen, eine untere Ebene 19 und eine obere Ebene 20, mit einem von beiden Ebenen gehaltenen Behälter 3, hier eine Getränkeflasche, auf.

Die untere Ebene 19 umfasst zwei übereinander angeordnete Formatteile 1, 2, die gegeneinander verdrehbar gelagert sind. In den beiden Formatteilen 1, 2 sind zur Ausbildung der Sterntaschen 4 Klemmarme 30a, 30b angeordnet. Von den zwei Klemmarmen 30a, 30b, die eine Sterntasche 4 ausbilden, ist jeweils ein erster Klemmarm 30a an dem unteren Formatteil 1 und ein zweiter Klemmarm 30b an dem oberen Formatteil 2 angeordnet. An einem freien Ende 31 der Klemmarme 30a, 30b ist jeweils eine auswechselbare Schutzkappe 32 befestigt.

Die untere Ebene 19 stellt eine weitere alternative Ausführungsform zu den in Figur 1 bis Figur 4 dargestellten Ausführungsformen eines Transportsterns 29 dar. Sie kann dementsprechend auch bei Transportsternen 29 mit nur einer Ebene als eigenständiger Transportstern 29 genutzt werden.

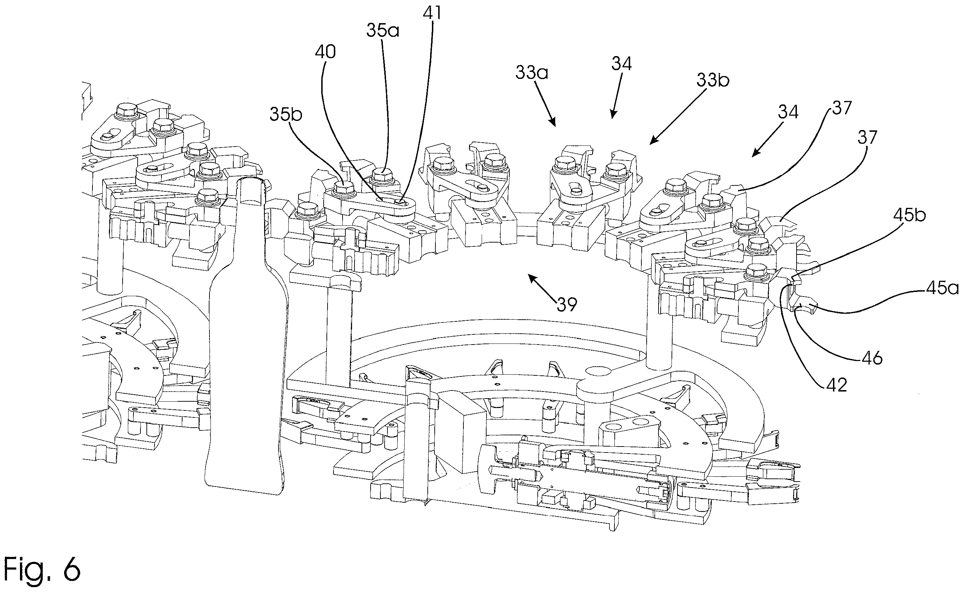

Die in Figur 5 und Figur 6 dargestellte obere Ebene 20 des Transportsterns 29 besteht im Gegensatz zu dem in Figur 3 und Figur 4 dargestellten Transportstern aus einer Klammerarmebene. D.h., der Transportstern 29 weist die untere Ebene 19 mit verstellbaren Sternrädern oder Klemmarmen 30a, 30b und die obere Ebene 20 mit Klammerarmen 33a, 33b auf. Dabei bilden jeweils zwei korrespondierend zueinander ausgebildete und angeordnete Klammerarme 33a, 33b eine Behälterklammer 34. Zu jeder Sterntasche 4 ist eine Behälterklammer 34 in der oberen Ebene 20 angeordnet.

Die Behälterklammer 34 kann als passive Klammer ausgebildet sein, bei der mittels einer Federspannung die Klammerarme 33a, 33b in einer Klammerposition gehalten werden, so dass der auf einen Behälter 3 wirkende Klammerdruck mittels der Federspannung erzeugt wird und das Öffnen der Behälterklammer 34 durch Eindrücken des Behälters zwischen die Klammerarme 33a, 33b erfolgt. Demgegenüber ist hier die Behälterklammer 34 jedoch als aktive Behälterklammer 34 ausgeführt, bei der zumindest das Öffnen oder das Schließen der Klammer, ggf. beide Bewegungen, durch eine entsprechende Verstellvorrichtung 39, die in Figur 5 und Figur 6 nur teilweise dargestellt ist, bewirkt wird.

Die Klammerarme 33a, 33b einer Behälterklammer 34 sind jeweils um eine Drehachse 35a, 35b schwenkbar gelagert. Jede Drehachse 35a, 35b ist am jeweiligen Klammerarm 33a, 33b zwischen einem freien Ende 36 mit einer Klemmbacke 37 und einem dem freien Ende 36 gegenüberliegenden Steuerarm 38, der mit der Verstellvorrichtung 39 gekoppelt ist, angeordnet.

Die Steuerarme 38 einer Behälterklammer 34 laufen gegenüber einer in Radialrichtung verlaufenden Achse schräg aufeinander zu. Die Steuerarme 38 sind zumindest abschnittsweise übereinander angeordnet. In den Steuerarmen 38 angeordnete Kulissenführungen 40 sind über einen Kulissenbolzen 41 miteinander gekoppelt, wodurch eine synchrone Bewegung der Klammerarme 33a, 33b gewährleistet ist.

Zum Öffnen und/oder Schließen der Klammerarme 33a, 33b ist die Verstellvorrichtung 39 bspw. über eine Steuerkurve (hier nicht dargestellt) ansteuerbar.

Die Klemmbacken 37 sind speziell zum Ergreifen einer Flasche im Bereich des Flaschenhalses, ausgebildet. Die Klemmbacken 37 sind hierfür halbschalenförmig ausgebildet und weisen einen verkürzten Stützschenkel 45a mit einer Anlagefläche 42 zum Kontakt mit dem Behälter 3 und einen gegenüber dem Stützschenke 45b länger ausgebildeten Greifschenkel 45a mit einer bogenförmigen Anlagefläche 46 auf.

Die Anlagefläche 42 des Stützschenkels 45b ist zum Kontakt mit dem Behälter 3 ausgebildet und derart angeordnet, dass eine Bewegung eines an der Anlagefläche 42 anliegenden Behälters 3 in Radialrichtung nach innen, d.h. in Radialrichtung zur der Transportsternmitte, blockiert wird.

Der Greifschenkel 45a und hier insbesondere die bogenförmige Anlagefläche 46 ist dagegen zum (zumindest teilweisen) Hintergreifen des Behälters 3 ausgebildet, wodurch eine Bewegung des Behälters 3 radial nach außen bspw. aufgrund von im Betrieb des Transportsterns 29 auftretenden nach außen wirkenden Radialkräften verhindert wird. Ein Abschnitt des Greifschenkels 45a ist somit in Radialrichtung A nach außen zeigend angeordnet.

Die von den Sterntaschen 4 und den Behälterklammern 34 gehaltenen Behälter 3 weisen, insbesondere wenn sie als Flaschen bspw. als Glas- oder PET-Flaschen ausgebildet sind, eine konische, d.h. eine sich nach oben zum Mündungsbereich verjüngende Form auf. Damit die Behälterklammer 34 besonders sicher am Behälter 3 angreifen kann, sind die Klammerbacken 37 um eine horizontale Drehachse 44 drehbar an dem Klammerarmen 33a, 33b gelagert, wobei die Drehachse 44 idealerweise als Bolzen oder Stumpfachse ausgeformt ist. Bei dem gezeigten Beispiel sind die Klammerbacken 37 um eine sich in Längsachsenrichtung der Klammerarme 33a, 33b erstreckenden Drehachse 44 drehbar an dem Klammerarmen 33a, 33b gelagert. Bei einer alternativen, nicht dargestellten Ausführungsform der Drehachse 44, ist diese Teil der Klammerbacken 37 und insbesondere als Monoblock ausgeführt, bei die Klammerarme 33a, 33b entsprechende Lagerelement aufweisen, um die zur Sternachse weisende Drehachse 44 aufzunehmen und zu lagern. Eine weitere alternative Ausführungsform besteht darin, dass im Übergang von den Klammerarmen 33a, 33b ein geeignetes elastisches Übergangselement vorgesehen ist, welches ein entsprechendes Verschwenken der Klammerbacken 37 um eine horizontale Achse zulässt.

Dabei ist von zentraler Bedeutung, dass das Verschwenken bei allen Ausführungsvarianten begrenzt ist und die Anlageflächen der Klammerbacken 37 in der inaktiven Leerstellung, d.h. ohne Behälter, sich unmittelbar gegenüber liegen. Idealerweise wird eine Rückstellkraft eingeleitet, um die neutrale Nullstellung mit optimaler Lage und Ausrichtung der Klammerbacken 37 bzw. deren jeweiliger Anlageflächen herzustellen.

Die Klammerarme 33a, 33b mit den drehbaren Klemmbacken 37 verhindern somit besonders wirkungsvoll eine Bewegung des erfassten Behälters 3 in eine radiale Richtung A des Transportsterns 29, während mit der durch die Formatteile 1, 2 der unteren Ebene 19 gebildeten Sterntasche 4 eine Bewegung des in der Sterntasche 4 angeordneten Behälters 3 quer zur Radialrichtung B blockiert wird.

Die in Figur 5 und Figur 6 dargestellten Klemmbacken 37 sind als Halbschalen bzw. U-profilartig ausgebildet. Dabei weisen die Schenkel des U-Profils in Radialrichtung nach außen. Der untere Schenkel ist als Greifschenkel 45a zum Umgreifen des Behälters 3 ausgebildet und erstreckt sich in seiner Länge in Radialrichtung gegenüber dem oberen Stützschenkel 45b deutlich weiter nach außen. Während an dem Stützschenkel 45b die Anlagefläche 42 angeordnet ist, weist der Greifschenkel 45a eine bogenförmige Anlagefläche 46 auf, die zum abschnittsweisen Umgreifen des Behälters 3, insbesondere einer Flasche, ausgebildet ist.

Insbesondere bei der Verwendung von Flaschen mit sich verjüngender Form ist, die drehbare Lagerung der Klemmbacken mittels der Drehachsen 44 von besonderem Vorteil, da beim Schließen der Behälterklammer 34, d.h. beim Anlegen einer bogenförmigen Anlagefläche 46 des Greifschenkels 45a und der Anlagefläche 42 des Stützschenkels 45b an die Außenwand der Flasche, eine automatische geringfügige Schwenkbewegung der Klemmbacke 37 um die Drehachse 44 erfolgt, so dass sowohl die Anlagefläche 42 als auch die bogenförmige Anlagefläche 46 sicher an der Außenwand der Flasche anliegen und der Greifschenkel 45a die Flasche abschnittsweise umgreift.

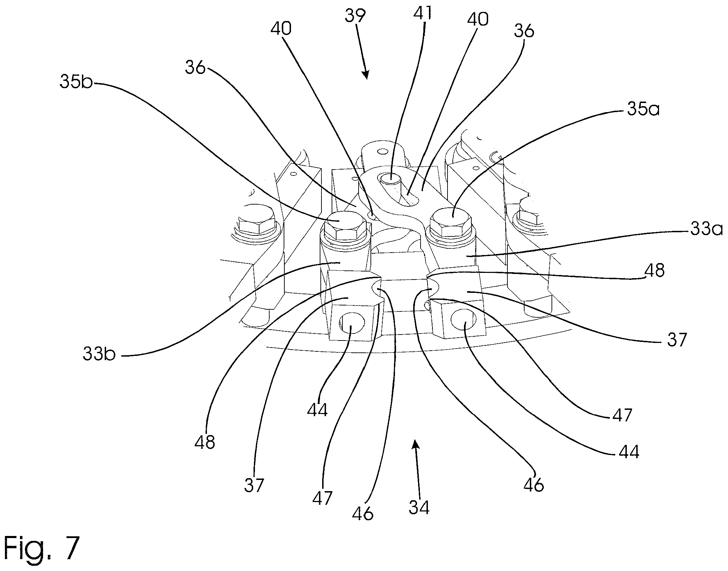

Figur 7 zeigt eine Behälterklammer 34 mit einer alternativen Ausführungsform der Klemmbacken 37. Diese sind hier nicht als Halbschalen, d.h. U-profilförmig ausgebildet, sondern als Block mit nach innen gerichteten im Querschnitt bogenförmigen Ausnehmungen 46 zum Anlegen an den Behälter 3. Die Klemmbacken 37 sind an den Klammerarmen 33a, 33b entsprechend den in Figur 5 und Figur 6 dargestellten Klemmbacken 47 drehbar um eine Drehachse 44 gelagert.

Die Schwenkbewegung der Klemmbacken 37 um die Drehachse 44 erfolgt automatisch mit dem Anlegen der bogenförmigen Ausnehmungen 46 bzw. der Anlagefläche des jeweiligen Ausnehmungsprofils an einen Getränkebehälter 3. Dabei umgreifen die Klemmbacken 37 mit einem vorderen Ende 47 den Getränkebehälter 3 zumindest abschnittsweise und stabilisieren diesen in Radialrichtung nach außen, wohingegen sie mit einem nach innen gerichteten Ende 48 der bogenförmigen Ausnehmung 46 den Getränkebehälter 3 abstützen und eine Bewegung in Radialrichtung nach innen blockieren.

Die Klammerarme 33a, 33b der Behälterklammer 34 sind entsprechend der Ausführungen aus Figur 5 und Figur 6 um ihre Drehachsen 35a, 35b verschwenkbar. Die Verschwenkbewegung kann mittels einer Steuerkurve, die auf die Verstellvorrichtung 39 einwirkt, eingeleitet werden. Die Verstellvorrichtung 39 weist entsprechend den Ausführungen in Figur 5 und Figur 6 in den nach innen gerichteten freien Enden 36 der Klammerarme 33a, 33b jeweils eine Kulissenführung 40 auf, die über einen Kulissenbolzen 41 miteinander gekoppelt sind. Insgesamt kann die vorgenannte Behälterklammer 34 alleinige bei einem entsprechende Transportstern 29 vorgesehen werden, sodass nur die obere Ebene 20 mit einer Mehrzahl von solchen Behälterklammern 34 ausgestattet ist.

### Bezugszeichenliste

- 1: Formatteil
- 2: Formatteil
- 3: Behälter
- 4: Sterntasche
- 5: Steuerelement
- 6: Steuerelement
- 7: Einstellelement
- 8: Fortsatz (auch 8a, 8b)
- 9: Bolzen
- 10: Kulissenstein
- 11: Spannvorrichtung
- 12: Betätigungselement
- 13: Außengewinde
- 14: Halteelement
- 15: Betätigungsende
- 16: Handrad
- 17: Formatteil
- 18: Formatteil
- 19: Untere Ebene
- 20: Obere Ebene
- 21: Steuerelement
- 22: Steuerelement
- 23: Betätigungselement
- 24: Einstellelement
- 25: Fortsatz
- 26: Sperrelement
- 27: Langloch
- 28: Abstandhalter
- 29: Transportstern
- 30a, 30b: Klemmarme
- 31: freies Ende des Klemmarmes
- 32: Schutzkappe
- 33a, 33b: Klammerarme
- 34: Behälterklammer
- 35a, 35b: Drehachsen Klammerarme
- 36: freies Ende des Klammerarmes
- 37: Klemmbacken
- 38: Steuerarm
- 39: Verstellvorrichtung
- 40: Kulissenführung
- 41: Kulissenbolzen
- 42: Anlageflächen
- 43: Greifabschnitt
- 44: Drehachse Klemmbacken
- 45a: Greifschenkel
- 45b: Stützschenkel
- 46: bogenförmige Anlagefläche
- 47: nach außen gerichtetes Ende Anlagefläche
- 48: nach innen gerichtetes Ende Anlagefläche
- MA: Maschinenachse

## Patentansprüche

1. Vorrichtung zum umlaufenden Transportieren von Behältern (4), welche einen Drehtisch aufweist, der übereinander angeordnete Formatteile (1,2,17,18) hat, welche an ihrem jeweiligen Außenumfang eine Vielzahl von taschenartigen Ausnehmungen aufweisen, welche gemeinsam Sterntaschen (4) zur Aufnahme von jeweils einem Behälter (3) pro Sterntasche (4) bilden, wobei zumindest eines der Formatteile (1,2,17,18) in Umfangsrichtung relativ zu zumindest einem anderen verdrehbar ist, und somit die Sterntaschen (4) gemeinsam hinsichtlich ihres Öffnungsbetrags verstellbar sind, wobei jeweils zwei übereinander angeordnete Formatteile (1,2; 17,18) jeweils zumindest ein Steuerelement (5,6; 21,22) aufweisen, wobei die Steuerelemente (5,6; 21,22) direkt übereinander angeordneter Formatteile (1,2; 17,18) eine zur radialen Richtung unterschiedliche Ausrichtung, Neigungsverlauf oder Ablenkungsradius aufweisen, wobei mindestens ein radial verfahrbares Einstellelement (7,24) vorgesehen ist, welches sowohl in das Steuerelement (5,6; 21,22) des einen Formatteils (1,2; 17,18) und in das Steuerelement (5,6; 21,22) des anderen Formatteils (1,2; 17,18) eingreift, wobei das Einstellelement (7; 24) mit mindestens einem Betätigungselement (12; 23) verbindbar ist, mittels welchem das Betätigungselement (12; 23) in radiale Richtung direkt oder mittelbar antreibbar ist, wobei das mindestens eine Betätigungselement (12, 23) das einzige radial verlaufende Führungselement darstellt,
**dadurch gekennzeichnet, dass**
oberhalb einer ersten Ebene (19) mit Sterntaschen (4) eine zweite Ebene (20) mit Behälterklammern (34) angeordnet ist und
jede Behälterklammer (34) zwei Klammerarme (33a, 33b) mit jeweils einer um eine in Längsachsenrichtung der Klammerarme (33a, 33b) ausgerichtete Drehachse (44) drehbaren Klemmbacke (37) aufweist.

2. Vorrichtung nach Anspruch 1, **dadurch gekennzeichnet, dass** jede Klemmbacke (33a, 33b) mindestens einen Greifschenkel (45a) zum Umgreifen des Behälters (3) und einen Stützschenkel (45b) zum Abstützen des Behälters (3) aufweist.

3. Vorrichtung nach Anspruch 2, **dadurch gekennzeichnet, dass** der Stützschenkel (45b) gegenüber dem Greifschenkel (45a) verkürzt ist.

4. Vorrichtung nach einem der vorhergehenden Ansprüche, **dadurch gekennzeichnet, dass** das jeweilige Steuerelement (5,6; 21,22) jeweils als Kulissenführung ausgeführt ist, welche jeweils in einem Fortsatz (8; 25) angeordnet ist, der an einem Innenumfang des jeweiligen Formatteils (1,2; 17,18) angeordnet ist.

5. Vorrichtung nach einem der vorhergehenden Ansprüche, **dadurch gekennzeichnet, dass** sich die jeweiligen Steuerelemente (5,6; 21,22) in Radialrichtung gesehen unterschiedlich ausgerichtet in Richtung zu einem Mittelpunkt des Drehtisches orientieren.

6. Vorrichtung nach einem der vorhergehenden Ansprüche, **dadurch gekennzeichnet, dass** die jeweiligen Steuerelemente (5,6; 21,22) in Radialrichtung gesehen einen gekrümmten oder geraden Verlauf aufweisen.

7. Vorrichtung nach einem der vorhergehenden Ansprüche, **dadurch gekennzeichnet, dass** sich die Steuerelemente (5,6; 21,22) zweier übereinander angeordneter Formatteile (1,2; 17,18) schneiden.

8. Vorrichtung nach einem der vorhergehenden Ansprüche, **dadurch gekennzeichnet, dass** das Einstellelement (7, 24) einen Bolzen (9) aufweist, an welchem Kulissensteine (10) angeordnet sind, von denen ein Kulissenstein (10) in das eine Steuerelement (5,6; 21,22) und der andere Kulissenstein (10) in das andere Steuerelement (5,6; 21,22) eingreift.

9. Vorrichtung nach einem der vorhergehenden Ansprüche, **dadurch gekennzeichnet, dass** das Einstellelement (7; 24) mit einem Betätigungselement (12; 23) mit Außengewinde (13) verbindbar ist, welches in eine Gewindebohrung des Einstellelementes (7; 24) eingreift, wobei das Betätigungselement (12; 23) an einem starren Halteelement (14) gelagert ist.

10. Vorrichtung nach einem der vorhergehenden Ansprüche, **dadurch gekennzeichnet, dass** ein Spindeltrieb gebildet ist.

11. Vorrichtung nach einem der vorhergehenden Ansprüche, **gekennzeichnet durch** ein starres Halteelement (14) an welchem zwei Betätigungselemente (12, 23) angeordnet sind, so dass zwei Ebenen (19, 20) von Formatteilen (1,2; 17,18) verdrehbar sind.

12. Vorrichtung nach einem der Ansprüche 9 oder 10, **dadurch gekennzeichnet, dass** nur ein einziges Betätigungselement (12) vorgesehen ist, welches an seinen beiden Enden Außengewinde (13) aufweist, und wobei eines als Linksgewinde und das andere als Rechtsgewinde geformt ist.

## Claims

1. Device for circulating transport of containers (4), which comprises a turntable with format parts (1, 2, 17, 18) arranged above one another, which have at their respective outer circumferences a plurality of pocket openings, which collectively form star wheel pockets (4), for receiving a respective container (3) per star wheel pocket (4), wherein at least one of the format parts (1, 2, 17, 18) can be rotated in the circumferential direction relative to at least one other, and therefore the star wheel pockets (4) can be adjusted in common in respect of their amount of opening, **wherein** in each case two format parts (1, 2, 17, 18) arranged above one another each have at least one control element (5, 6; 21, 22), wherein the control elements (5, 6; 21, 22) of format parts (1, 2; 17, 18) arranged directly above one another have a different orientation, inclination path, or deflection radius in relation to the radial direction, wherein at least one radially movable adjusting element (7, 24) is provided, which engages both into the control element (5, 6; 21, 22) of the one format part (1, 2; 17, 18) and into the control element (5, 6; 21, 22) of the other format part (1, 2; 17, 18), wherein the adjusting element (7; 24), with which at least one actuating element (12; 23) can be connected, by means of which the actuating element (12; 23) can be driven directly or indirectly in the radial direction, wherein the at least one actuating element (12, 23) represents the only radially running guide element,
**characterized in that**
arranged above a first plane (19) with star wheel pockets (4) is a second plane (20) with container clamps (34), and each container clamp (34) comprises two clamping arms (33a, 33b), each with a clamping jaw (37) which can be rotated about an axis of rotation (44) aligned in the longitudinal axis direction of the clamping arms (33a, 33b).

2. Device according to claim 1, **characterized in that** each clamping jaw (33a, 33b) comprises at least one gripping limb (45a) for gripping around the container (3) and a support limb (45b) for supporting the container (3).

3. Device according to claim 2, **characterized in that** the support limb (45b) is shortened in relation to the gripping limb (45a).

4. Device according to any one of the preceding claims, **characterized in that** the respective control element (5, 6; 21, 22) is configured in each case as a link guide, which in each case is arranged in an extension (8; 25) which is arranged at an inner circumference of the respective format part (1, 2; 17, 18).

5. Device according to any one of the preceding claims, **characterized in that** the respective control elements (5, 6; 21, 22), seen in the radial direction, are oriented differently in the direction towards a mid-point of the turntable.

6. Device according to any one of the preceding claims, **characterized in that** the respective control elements (5, 6; 21, 22), seen in the radial direction, exhibit a curved or straight path.

7. Device according to any one of the preceding claims, **characterized in that** the control elements (5, 6; 21, 22) intersect, of two format parts (1, 2; 17, 18) arranged above another.

8. Device according to any one of the preceding claims, **characterized in that** the adjusting element (7, 24) comprises a bolt (9), arranged at which are slide blocks (10), of which one slide block (10) engages into one control element (5, 6; 21, 22) and the other slide block (10) engages into the other control element (5, 6; 21, 22).

9. Device according to any one of the preceding claims, **characterized in that** the adjusting element (7; 24) can be connected to an actuating element (12; 23) with an external thread (13), which engages into a threaded hole of the adjusting element (7; 24), wherein the actuating element (12; 23) is mounted in a rigid holding element (14).

10. Device according to any one of the preceding claims, **characterized in that** a spindle drive is formed.

11. Device according to any one of the preceding claims, **characterized by** a rigid holding element (14) at which two actuating elements (12, 23), such that two planes (19, 20) of format parts (1, 2; 17, 18) can be rotated.

12. Device according to any one of claims 9 or 10, **characterized in that** only one single actuating element (12) is provided, which comprises an external thread (13) at both of its ends, and wherein one is formed as a left-hand thread and the other is formed as a right-hand thread.

## Revendications

1. Dispositif de transport en périphérie de contenants (4), lequel présente un plateau tournant qui possède des pièces de format (1, 2, 17, 18) disposées les unes au-dessus des autres, lesquelles présentent, sur leur périphérie extérieure respective, une pluralité d'évidements de type poche, lesquels forment conjointement des poches en étoile (4) pour recevoir respectivement un contenant (3) par poche en étoile (4), dans lequel au moins une des pièces de format (1, 2, 17, 18) peut être tournée dans la direction périphérique par rapport à au moins une autre pièce de format et ainsi les poches en étoile (4) peuvent être ajustées conjointement quant à la valeur de leur ouverture, dans lequel respectivement deux pièces de format (1, 2 ; 17, 18) disposées l'une au-dessus de l'autre présentent respectivement au moins un élément de commande (5, 6 ; 21, 22), dans lequel les éléments de commande (5, 6 ; 21, 22) de pièces de format (1, 2 ; 17, 18) disposées directement les unes au-dessus des autres présentent une orientation, un profil d'inclinaison ou un rayon de déviation différents par rapport au sens radial, dans lequel au moins un élément de réglage (7, 24) pouvant être déplacé radialement est prévu, lequel vient en prise à la fois avec l'élément de commande (5, 6 ; 21, 22) d'une pièce de format (1, 2 ; 17 ; 18) et avec l'élément de commande (5, 6 ; 21, 22) de l'autre pièce de format (1, 2 ; 17, 18), dans lequel l'élément de réglage (7 ; 24) peut être relié à au moins un élément d'actionnement (12 ; 23), au moyen duquel l'élément d'actionnement (12 ; 23) peut être entraîné directement ou indirectement dans le sens radial, dans lequel l'au moins un élément d'actionnement (12 ; 23) constitue l'élément de guidage unique s'étendant radialement,
**caractérisé en ce que**
un deuxième plan (20) avec des pinces de contenant (34) est disposé au-dessus d'un premier plan (19) avec des poches en étoile (4) et
chaque pince de contenant (34) présente deux bras de pince (33a, 33b) avec respectivement une mâchoire de serrage (37) pouvant tourner autour d'un axe de rotation (44) orienté dans le sens de l'axe longitudinal des bras de pince (33a, 33b).

2. Dispositif selon la revendication 1,
**caractérisé en ce que** chaque mâchoire de serrage (33a, 33b) présente au moins une branche de préhension (45a) pour saisir le contenant (3) et une branche d'appui (45b) pour soutenir le récipient (3).

3. Dispositif selon la revendication 2, **caractérisé en ce que** la branche d'appui (45b) est raccourcie par rapport à la branche de préhension (45a).

4. Dispositif selon l'une quelconque des revendications précédentes, **caractérisé en ce que** l'élément de commande (5, 6 ; 21, 22) respectif est réalisé respectivement en tant qu'un guide à coulisse, lequel est disposé respectivement dans un prolongement (8 ; 25), qui est disposé sur une périphérie intérieure de la pièce de format (1, 2 ; 17, 18) respective.

5. Dispositif selon l'une quelconque des revendications précédentes, **caractérisé en ce que** les éléments de commande (5, 6 ; 21, 22) respectifs s'orientent en direction d'un point central du plateau tournant avec une orientation différente vus dans le sens radial.

6. Dispositif selon l'une quelconque des revendications précédentes, **caractérisé en ce que** les éléments de commande (5, 6 ; 21, 22) respectifs présentent un profil incurvé ou rectiligne vus dans le sens radial.

7. Dispositif selon l'une quelconque des revendications précédentes, **caractérisé en ce que** les éléments de commande (5, 6 ; 21, 22) de deux pièces de format (1, 2 ; 17, 18) disposées l'une au-dessus de l'autre se croisent.

8. Dispositif selon l'une quelconque des revendications précédentes, **caractérisé en ce que** l'élément de réglage (7, 24) présente un boulon (9), sur lequel des coulisseaux (10) sont disposés, dont un coulisseau (10) vient en prise avec un élément de commande (5, 6 ; 21, 22) et l'autre coulisseau (10) vient en prise avec l'autre élément de commande (5, 6 ; 21, 22).

9. Dispositif selon l'une quelconque des revendications précédentes, **caractérisé en ce que** l'élément de réglage (7 ; 24) peut être relié à un élément d'actionnement (12 ; 23) avec un filetage extérieur (13), lequel vient en prise avec un alésage fileté de l'élément de réglage (7 ; 24), dans lequel l'élément d'actionnement (12 ; 23) est monté sur un élément de maintien (14) rigide.

10. Dispositif selon l'une quelconque des revendications précédentes, **caractérisé en ce qu'**un mécanisme à broche est formé.

11. Dispositif selon l'une quelconque des revendications précédentes, **caractérisé par** un élément de maintien (14) rigide, sur lequel deux éléments d'actionnement (12, 23) sont disposés de telle sorte que deux plans (19, 20) de pièces de format (1, 2 ; 17, 18) peuvent être tournés.

12. Dispositif selon l'une quelconque des revendications 9 ou 10, **caractérisé en ce que** seulement un unique élément d'actionnement (12) est prévu, lequel présente sur ses deux extrémités un filetage extérieur (13), et dans lequel l'un est façonné en tant que filetage gauche et l'autre est façonné en tant que filetage droit.
